# EUROPÄISCHE PATENTSCHRIFT

(11) **EP 3 087 279 B1**
(45) Veröffentlichungstag und Bekanntmachung des Hinweises auf die Patenterteilung: **01.12.2021**
(21) Anmeldenummer: 14708483.4
(22) Anmeldetag: 06.03.2014
(51) Int. Cl.: F15B 11/00, F15B 13/04, F16K 11/20

(54) **VENTILANORDNUNG**
VALVE ASSEMBLY
ENSEMBLE DE SOUPAPES

(43) Veröffentlichungstag der Anmeldung: 02.11.2016
(73) Patentinhaber: Festo SE & Co. KG, 73734 Esslingen (DE)
(72) Erfinder: BRENNER, Jakob, 73734 Esslingen (DE); DICKHOFF, Andreas, 73230 Kirchheim unter Teck (DE)
(74) Vertreter: Patentanwälte Magenbauer & Kollegen Partnerschaft mbB
(86) Internationale Anmeldenummer: PCT/EP2014/000566
(87) Internationale Veröffentlichungsnummer: WO 2015/131915

(56) Entgegenhaltungen:
- EP-A2- 0 099 134
- WO-A1-2013/013760
- FR-A- 1 434 696
- GB-A- 2 041 170

## Beschreibung

Die Erfindung betrifft eine Ventilanordnung, mit wenigstens einer Ventilsteuergruppe, die zwei fluidisch miteinander verschaltete erste und zweite Ventileinheiten enthält, die jeweils eine peripher von einem Wandkörper begrenzte längliche Ventilkammer und einen in der Ventilkammer axial verschiebbar angeordneten Ventilstößel aufweisen, wobei in jeder Ventilkammer ein bezüglich des Wandkörpers ortsfester, axial orientierter Ventilsitz angeordnet ist, der eine Überströmöffnung umrahmt, die einen auf der Seite des Ventilsitzes liegenden ersten Ventilkammerabschnitt mit einem auf der entgegengesetzten Seite liegenden zweiten Ventilkammerabschnitt verbindet, wobei dem Ventilsitz in dem ersten Ventilkammerabschnitt ein Absperrabschnitt des Ventilstößels gegenüberliegt, der im Rahmen einer axialen Steuerbewegung des Ventilstößels zwischen einer am Ventilsitz anliegenden und dadurch die Überströmöffnung verschließenden Schließstellung und mindestens einer von dem Ventilsitz abgehobenen und dadurch einen Fluidübertritt zwischen den beiden Ventilkammerabschnitten ermöglichenden Offenstellung bewegbar ist, wobei der erste Ventilkammerabschnitt der ersten Ventileinheit und der zweite Ventilkammerabschnitt der zweiten Ventileinheit miteinander und mit einer mit einem Verbraucher verbindbaren Arbeitsöffnung in ständiger Fluidverbindung stehen und wobei jeder Ventilstößel die ihm zugeordnete Überströmöffnung durchsetzt und einen den ersten Ventilkammerabschnitt an der der Überströmöffnung axial entgegengesetzten Seite dicht verschließenden ersten Verschlussabschnitt sowie einen den zweiten Ventilkammerabschnitt an der der Überströmöffnung axial entgegengesetzten Seite dicht verschließenden zweiten Verschlussabschnitt aufweist, wobei die Durchmesser der beiden Verschlussabschnitte jedes Ventilstößels untereinander gleich groß sind und außerdem gleich groß oder geringfügig kleiner sind als der Durchmesser der Überströmöffnung,
- wobei der zweite Ventilkammerabschnitt der ersten Ventileinheit mit einer zu einer Drucksenke führbaren Entlastungsöffnung und der erste Ventilkammerabschnitt der zweiten Ventileinheit mit einer mit einer Druckquelle verbindbaren Speiseöffnung kommuniziert,
- wobei die Ventilanordnung eine elektrisch betätigbare Steuereinrichtung enthält, die ausgebildet ist, um die Ventilstößel zum Zwecke des Hervorrufens ihrer Steuerbewegung und zur Vorgabe ihrer jeweiligen Schaltstellung gesteuert mit einer Antriebskraft zu beaufschlagen,
- und wobei die Ventileinheiten von durch Fluidkraft betätigbarer Bauart sind, wobei die Steuereinrichtung eine elektro-fluidische Steuereinrichtung ist, die eine elektrisch betätigbare Vorsteuerventileinrichtung enthält, die ausgebildet ist, um auf der Grundlage von elektrischen Steuersignalen, die von einer elektronischen Steuereinheit der Steuereinrichtung stammen, die Ventilstößel gesteuert mit einem die Antriebskraft liefernden Antriebsfluid zu beaufschlagen.

Die WO 2013/013760 A1 offenbart eine gemäß dem Oberbegriff des Anspruchs 1 ausgebildete Ventilanordnung, die zur Fluidversorgung eines angeschlossenen Verbrauchers ausgebildet ist und die über ein Ventilmodul verfügt, das ein Ventilgehäuse umfasst, in dem Ventilschächte ausgebildet sind, in denen jeweils eine Ventilpatrone angeordnet ist. Jede Ventilüpatrone begrenzt zusammen mit dem zugehörigen Ventilschacht einen Druckraum und hat zwei elektrisch ansteuerbare Ventilmittel, die dazu ausgebildet sind, einen freien Strömungsquerschnitt zwischen dem Druckraum und einem dem jeweiligen Ventilmittel zugeordneten Ausgangsanschluss zu beeinflussen.

Eine aus der DE 203 05 052 U1 bekannte Ventilanordnung enthält zwei Ventilsteuergruppen, die jeweils zwei fluidisch miteinander verschaltete erste und zweite Ventileinheiten aufweist, die nach Art von Sitzventilen konzipiert sind. Jede Ventileinheit enthält eine Ventilkammer, in der ein elektromagnetisch bewegbarer Ventilstößel angeordnet ist, der über einen Absperrabschnitt verfügt, der einem axial orientierten Ventilsitz gegenüberliegt. Der Ventilsitz umrahmt eine Überströmöffnung, die zwei Ventilkammerabschnitte miteinander verbindet, wobei durch entsprechende Positionierung des Ventilstößels und folglich des Absperrabschnittes ein wahlweises Absperren oder Freigeben der Überströmöffnung hervorrufbar ist. Bei jeder Ventilsteuergruppe sind zwei Ventilkammerabschnitte der beiden Ventileinheiten sowohl miteinander als auch mit einer Arbeitsöffnung verbunden. Außerdem ist der jeweils andere Ventilkammerabschnitt bei der einen Ventileinheit mit einer Druckquelle und bei der anderen Ventileinheit mit einer Drucksenke in Gestalt der Atmosphäre verbunden. Jede Ventileinheit bildet ein 2/2-Wegeventil, wobei durch aufeinander abgestimmte Ansteuerung der Ventileinheiten mittels einer Steuereinrichtung zahlreiche Mehrwege- und Schaltfunktionen erzielt werden können.

Bei der vorgenannten Ventilanordnung wird jeder Absperrabschnitt durch Federmittel in eine die Überströmöffnung verschließende Schließstellung vorgespannt. Damit auch hohe Betriebsdrücke steuerbar sind, bedarf es entsprechend hoher Federkräfte, die jedoch von den elektromagnetischen Antriebsmitteln auch dann überwunden werden müssen, wenn die Ventilanordnung zur Steuerung nur geringer Betriebsdrücke eingesetzt wird. Folglich kann die Ventilanordnung nur in bestimmten engen Bereichen des Betriebsdruckes wirtschaftlich betrieben werden. Eine Verwendung in Verbindung mit wechselnden Betriebsdrücken ist daher nicht empfehlenswert. Folglich müssen, um einen wirtschaftlichen Betrieb zu gewährleisten, für unterschiedliche Betriebsdrücke unterschiedlich ausgelegte Ventilanordnungen zur Verfügung gestellt werden. Dies erfordert einen erhöhten Herstellungs- und Lagerhaltungsaufwand.

Die FR 1 434 696 A offenbart eine Ventilanordnung, bei der mehrere Ventileinheiten fluidisch miteinander verschaltet sind, die jeweils einen in einer Ventilkammer bewegbar angeordneten Ventilschieber aufweisen, der abhängig von seiner Schaltstellung zwei Ventilkammerabschnitte voneinander abtrennen oder miteinander verbinden kann. Eine Arbeitsöffnung der Ventilanordnung ist ständig mit einer Ventilkammer jeder Ventileinheit verbunden und kann durch Betätigung der Ventileinheiten abwechselnd mit einer Entlastungsöffnung oder einer Speiseöffnung verbunden werden.

Aus der DE 102 08 390 A1 ist ein Mehrwegeventil bekannt, das sich aus mindestens vier in Reihe geschalteten 2/2-Wegeventilen zusammensetzt, die variabel ansteuerbar sind, so dass zahlreiche Ventilfunktionen frei konfigurierbar sind. Aus der EP 1 207 329 B1 ist ein Piezoventil bekannt, das eine sich aus zwei Biegewandlern zusammensetzende Biegewandlereinheit aufweist. Jeder Biegewandler kann durch Zusammenwirken mit einem ihm zugeordneten Ventilsitz eine Fluidströmung steuern. Auf diese Weise lassen sich mit einem demselben Piezoventil unterschiedliche Ventilfunktionen realisieren.

Der Erfindung liegt die Aufgabe zugrunde, Maßnahmen vorzuschlagen, die auch bei unterschiedlichen Betriebsdrücken einen wirtschaftlichen Betrieb der Ventilanordnung ermöglichen.

Zur Lösung dieser Aufgabe ist in Verbindung mit den eingangs genannten Merkmalen vorgesehen,
- dass die Steuereinrichtung eine Proportional-Steuereinrichtung ist, durch die die Ventilstößel stufenlos wahlweise in der Schließstellung sowie in mehreren, unterschiedliche Strömungsquerschnitte der Überströmöffnung freigebenden Offenstellungen positionierbar sind,
- wobei die Steuereinrichtung für jede Ventileinheit ein die momentane Schaltstellung des Ventilstößels erfassendes Wegmesssystem enthält,
- wobei die Steuereinheit in der Lage ist, auf der Basis der Messwerte des Wegmesssystems und unter ergänzender Berücksichtigung externer Rückmeldedaten die Vorsteuerventileinrichtung so elektrisch anzusteuern, dass die Ventilstößel der beiden Ventileinheiten bedarfsgemäß positioniert werden.

Auf diese Weise liegt eine Ventilanordnung vor, deren mindestens eine Ventilsteuergruppe in der Lage ist, eine mit einem Verbraucher verbindbare oder verbundene Arbeitsöffnung wahlweise mit einer Druckquelle oder mit einer Drucksenke zu verbinden, um den Verbraucher entweder mit Druckmedium zu speisen oder druckmäßig zu entlasten. Ein typisches Anwendungsgebiet ist dabei die Ansteuerung eines als Verbraucher fungierenden fluidbetätigten Arbeitszylinders. Ein besonderer Vorteil der Ventilanordnung liegt darin, dass die für die Betätigung der Ventileinheiten erforderlichen Betätigungskräfte nicht oder nur unwesentlich von der Höhe des zu steuernden Betriebsdruckes abhängen, was auf die axial beidseits des Absperrabschnittes vorhandenen Verschlussabschnitte des Ventilstößels zurückzuführen ist, deren den jeweils zugeordneten Ventilkammerabschnitt verschließender Durchmesser einerseits untereinander gleich groß ist und andererseits auch gleich groß ist wie der Durchmesser der durch den Absperrabschnitt steuerbaren Überströmöffnung oder vorzugsweise etwas kleiner ist wie der Durchmesser dieser Überströmöffnung. Man erhält dadurch eine zumindest weitestgehende, auch als Druckkompensation bezeichenbare Kompensation der am Ventilstößel in axialer Richtung angreifenden Druckkräfte, so dass die zum Hervorrufen der Steuerbewegung erforderlichen Betätigungskräfte nicht oder nicht nennenswert von der Höhe des Betriebsdruckes beeinflusst werden, was einen wirtschaftlichen Betrieb der Ventilanordnung auch in Verbindung mit unterschiedlichen Betriebsdrücken ermöglicht. Bevorzugt ist eine Auslegung, bei der die Durchmesser der beiden Verschlussabschnitte minimal kleiner sind als der Durchmesser der Überströmöffnung, was in Verbindung mit der gewählten Verschaltung der Ventilkammerabschnitte dazu führt, dass die Ventilstößel in der Schließstellung einer in der Schließrichtung wirkenden geringfügigen Druckkraft ausgesetzt sind. Die Höhe dieser resultierenden Schließkraft ist druckabhängig, so dass sie umso größer wird, je größer der im ersten Ventilkammerabschnitt herrschende Fluiddruck ist. Dadurch ist auch bei hohen Fluiddrücken ein sicheres Absperren der Überströmöffnung gewährleistet. Gleichwohl sind die zur Betätigung der Ventilstößel erforderlichen Betätigungskräfte insgesamt relativ gering, weil der Durchmesser der Überströmöffnung nur geringfügig größer ist wie die Durchmesser der beiden Verschlussabschnitte.

Die Ventilanordnung hat auch den Vorteil, dass die Überströmöffnungen der beiden Ventileinheiten von der Seite des den Absperrabschnitt aufnehmenden ersten Ventilkammerabschnittes her durchströmt werden. Wie sich gezeigt hat, begünstigt hierbei die Fluidströmung das Offenhalten der Überströmöffnung. Es entstehen keine nennenswerten Strömungskräfte, die danach trachten, den Absperrabschnitt in die Schließstellung zu bewegen. Dies vereinfacht die Ansteuerung der Ventileinheiten und begünstigt vor allem eine geregelte Betriebsweise in Verbindung mit einer Proportionalanwendung.

Die Ventilanordnung ist mit einer elektrisch betätigbaren Steuereinrichtung ausgestattet, durch die die Ventilstößel gesteuert mit Antriebsenergie beaufschlagbar sind, um ihre Steuerbewegungen hervorzurufen und um sie in der jeweils gewünschten Schaltstellung zu positionieren. Die Steuereinrichtung ist eine Proportional-Steuereinrichtung, die es ermöglicht, jeden Ventilstößel stufenlos zu positionieren, wobei jeder Ventilstößel außer in der Schließstellung auch noch in mehreren vom Ventilsitz unterschiedlich weit abgehobenen Offenstellungen positionierbar ist, so dass dem zu steuernden Fluid unterschiedlich große Strömungsquerschnitte zur Verfügung gestellt werden können, was insbesondere auch Variationen im Durchfluss ermöglicht. Die Ventileinheiten sind von durch Fluidkraft betätigbarer Bauart. In diesem Zusammenhang ist die Steuereinrichtung als eine elektro-fluidische Steuereinrichtung ausgebildet, die eine elektrisch betätigbare Vorsteuerventileinrichtung enthält, die in der Lage ist, auf der Basis ihr zugeführter elektrischer Steuersignale eine die Steuerbewegung der Ventilstößel hervorrufende Fluidbeaufschlagung der Ventilstößel hervorzurufen. In diesem Fall wird den Ventilstößeln die zu ihrer Betätigung erforderliche Antriebskraft durch ein Antriebsfluid auferlegt. Die Steuereinrichtung enthält für jede Ventileinheit ein die momentane Schaltstellung des Ventilstößels erfassendes Wegmesssystem. Dessen Signale kann die Steuereinrichtung insbesondere bei einer Lageregelung des betreffenden Ventilstößels verwerten.

Vorteilhafte Weiterbildungen der Erfindung gehen aus den Unteransprüchen hervor.

Zweckmäßigerweise ist der Absperrabschnitt jedes Ventilstößels als ein Ventilteller ausgebildet, der mit axialem Abstand zu dem den ersten Ventilkammerabschnitt verschließenden ersten Verschlussabschnitt des Ventilstößels angeordnet ist. Somit wirkt das in dem ersten Ventilkammerabschnitt in dem zwischen dem Absperrabschnitt und dem ersten Verschlussabschnitt liegenden Bereich anstehende Druckmedium in der Schließrichtung auf den Ventilteller und in der Öffnungsrichtung auf den ersten Verschlussabschnitt ein.

Die Verschlussabschnitte jedes Ventilstößels sind zweckmäßigerweise als unter Abdichtung gleitverschieblich an der Innenumfangsfläche des Wandkörpers anliegende Verschlusskolben ausgebildet. Jeder Verschlusskolben verfügt zweckmäßigerweise über eine ringförmige Dichtung, die den Dichtkontakt zu der Innenumfangsfläche des Wandkörpers herstellt. Ein derartiger Aufbau hat herstellungs- und kostenmäßige Vorteile gegenüber einer durch Membranelemente hervorgerufenen statischen Abdichtung, die aber prinzipiell ebenfalls realisierbar ist. In den jeweils mit einem Verschlusskolben zusammenwirkenden Bereichen hat die Ventilkammer gleich große Durchmesser, wobei diese Durchmesser im Vergleich zum Durchmesser der Überströmöffnung ebenfalls gleich groß oder vorzugsweise geringfügig größer sind.

Jede Ventileinheit enthält zweckmäßigerweise Federmittel, die den Ventilstößel in Richtung der Schließstellung vorspannen. Durch die Federmittel wird der Ventilstößel in unbetätigtem Zustand in der Schließstellung gehalten, die die Grundstellung des Ventilstößels definiert. Auf diese Weise ist sichergestellt, dass die Ventilstößel im unbetätigten Zustand und insbesondere auch im gänzlich drucklosen Zustand der Ventileinheiten eine definierte Grundstellung einnehmen.

Die Ventilanordnung enthält zweckmäßigerweise ein die Ventilstößel aufnehmendes Ventilgehäuse, an das ein die Steuereinrichtung aufnehmendes Steuergehäuse angebaut ist. Die die Ventilkammern definierenden Wandkörper sind zweckmäßigerweise als in das Ventilgehäuse eingesetzte Hülsenkörper ausgebildet, können aber auch unmittelbar vom Ventilgehäuse selbst gebildet sein.

Es ist vorteilhaft, wenn jeder Ventilstößel einen gesteuert mit einem Antriebsfluid beaufschlagbaren Antriebskolben aufweist, der insbesondere eine Fluidbeaufschlagung im Öffnungssinne des Ventilstößels ermöglicht. Der Antriebskolben ist zweckmäßigerweise in Baueinheit mit einem der Verschlussabschnitte ausgebildet, insbesondere mit dem den zweiten Ventilkammerabschnitt verschließenden zweiten Verschlussabschnitt.

Ein besonders kostengünstiger Aufbau der Ventilanordnung ist möglich, wenn die beiden Ventileinheiten der Ventilsteuergruppe untereinander identisch ausgebildet sind. Kompakte Abmessungen sind realisierbar, wenn die Ventileinheiten mit zueinander parallelen Längsachsen nebeneinander und dabei in Achsrichtung dieser Längsachsen auf gleicher Höhe angeordnet sind. Als besonders vorteilhaft wird es angesehen, wenn die Ventileinheiten so ausgerichtet sind, dass ihre Ventilsitze in die gleiche axiale Richtung weisen. Letzteres begünstigt eine Betätigung der zur gleichen Ventilsteuergruppe gehörenden Ventilstößel von der gleichen axialen Seite der Ventilanordnung her.

Es ist von Vorteil, wenn die beiden Ventilstößel jeder Ventilsteuergruppe in einem gemeinsamen Ventilgehäuse angeordnet sind, das zweckmäßigerweise einstückig ausgebildet ist. In diesem Ventilgehäuse ist ein Verbindungskanal ausgebildet, der den ersten Ventilkammerabschnitt der ersten Ventileinheit mit dem zweiten Ventilkammerabschnitt der zweiten Ventileinheit verbindet und von dem außerdem ein Arbeitskanal abzweigt, der zu der Arbeitsöffnung führt, die außen am Ventilgehäuse angeordnet ist. Der Verbindungskanal hat zweckmäßigerweise einen S-förmigen Verlauf, wobei der Arbeitskanal zweckmäßigerweise in einem mittleren Bereich von dem Verbindungskanal abzweigt.

Zweckmäßigerweise ist der Wandkörper jeder Ventileinheit hülsenförmig und gesondert von dem Ventilgehäuse ausgebildet, wobei er in das Ventilgehäuse eingesetzt ist. Besonders zweckmäßig ist ein Aufbau, bei dem die beiden Ventileinheiten patronenartig ausgebildet und jeweils axial in eine Aufnahmebohrung des Ventilgehäuses eingesetzt sind, wobei jede Ventileinheit einen hülsenförmigen Wandkörper aufweist, in den der zugehörige Ventilstößel durch axialen Formschluss unverlierbar eingesetzt ist. Die Ventileinheiten können somit als vormontierte Baugruppe beim Zusammenbau der Ventilanordnung in die zugeordnete Aufnahmebohrung des Ventilgehäuses eingesetzt werden.

Die Ventilanordnung kann über nur eine einzige Ventilsteuergruppe oder auch über mehrere, insbesondere über zwei Ventilsteuergruppen verfügen. Jede dieser Ventilsteuergruppen ist in dem oben erläuterten Sinne ausgebildet. Von Vorteil ist es dabei, wenn die ersten Ventilkammerabschnitte der zweiten Ventileinheiten der mehreren Ventilsteuergruppen gemeinsam mit einer mit einer Druckquelle verbindbaren Speiseöffnung kommunizieren, so dass sie gemeinsam, über eine einzige Speiseöffnung hinweg, mit dem zu steuernden Druckmedium versorgt werden können. Zweckmäßigerweise erfolgt auch eine gemeinsame Druckentlastung sämtlicher Ventileinheiten, zu welchem Zweck die zweiten Ventilkammerabschnitte der ersten Ventileinheitender vorhandenen Ventilsteuergruppen gemeinsam mit einer Entlastungsöffnung kommunizieren, die ihrerseits zu einer Drucksenke führbar ist, insbesondere zur Atmosphäre.

Die Ventilanordnung ist insbesondere zur Steuerung von Druckluft verwendbar. Allerdings eignet sie sich auch zur Steuerung anderer gasförmiger Medien und auch zur Steuerung flüssiger Medien. Darüber hinaus ist die Ventilanordnung auch zur Steuerung von Vakuum geeignet.

Nachfolgend wird die Erfindung anhand der beiliegenden Zeichnung näher erläutert. In dieser zeigen:
- Figur 1: einen Längsschnitt durch eine bevorzugte Ausführungsform der erfindungsgemäßen Ventilanordnung, in dem eine bevorzugt vorhandene Steuereinrichtung nur schematisch angedeutet ist,
- Figur 2: eine schematische Darstellung einer weiteren vorteilhaften Ausführungsform der Ventilanordnung, die im Unterschied zu der mit nur einer Ventilsteuergruppe ausgestatteten Ventilanordnung der Figur 1 mit zwei Ventilsteuergruppen ausgestattet ist.

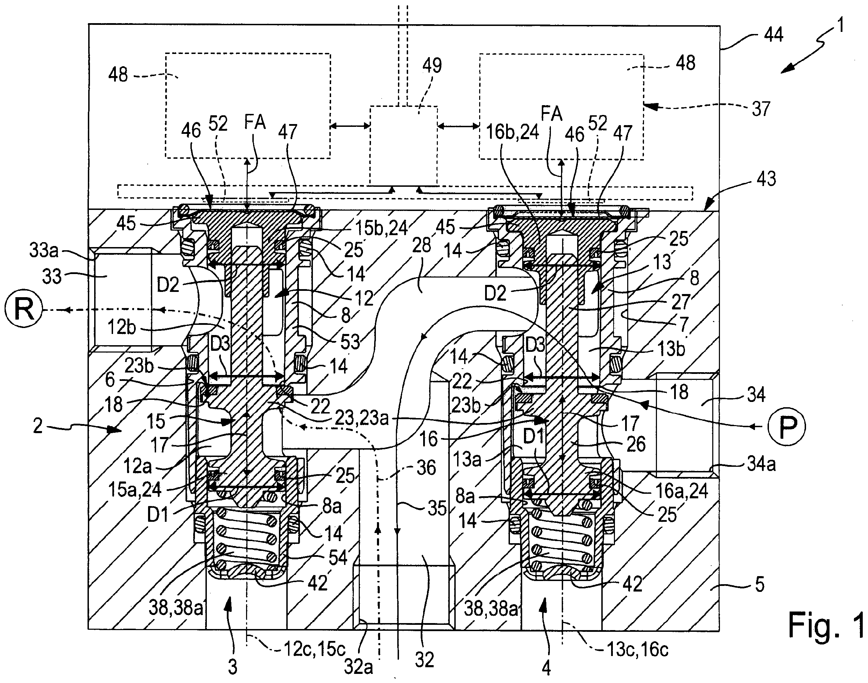

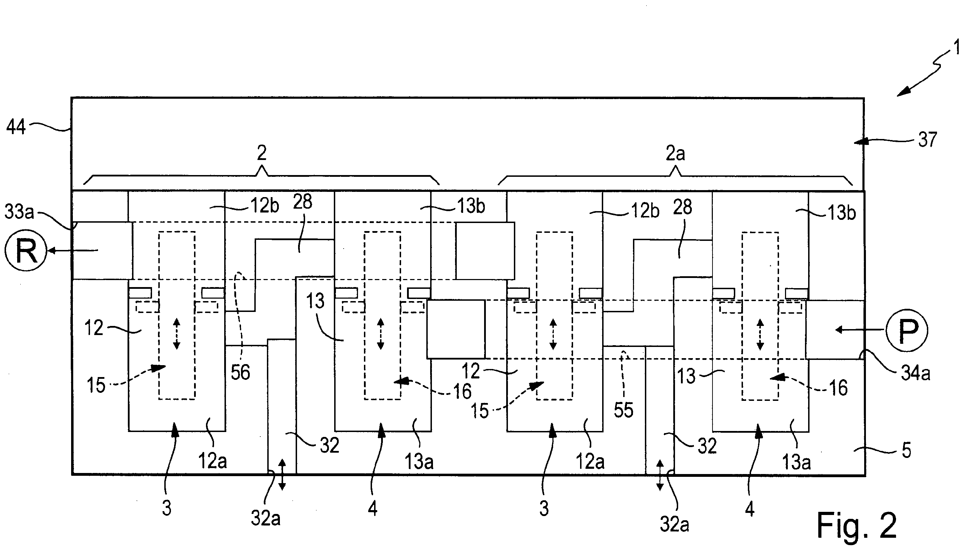

Die in ihrer Gesamtheit mit Bezugsziffer 1 bezeichnete Ventilanordnung ist mit mindestens einer Ventilsteuergruppe 2 ausgestattet, die über zwei fluidisch miteinander verschaltete Ventileinheiten verfügt, die als erste Ventileinheit 3 und als zweite Ventileinheit 4 bezeichnet sein. Während das Ausführungsbeispiel der Figur 1 nur eine einzige Ventilsteuergruppe 2 enthält, ist das in Figur 2 abgebildete Ausführungsbeispiel zusätzlich mit einer weiteren, zweiten Ventilsteuergruppe 2a ausgestattet, deren Aufbau jedoch mit demjenigen der Ventilsteuergruppe 2 übereinstimmt. Die nachstehende Beschreibung konzentriert sich zunächst auf den Aufbau der in Figur 1 illustrierten Ventilanordnung 1.

Die Ventilanordnung 1 enthält ein Ventilgehäuse 5, das bevorzugt einstückig ausgebildet ist und in dem die beiden Ventileinheiten 3, 4 aufgenommen sind. Das Ventilgehäuse 5 enthält eine erste Aufnahmebohrung 6, die die erste Ventileinheit 3 aufnimmt, und ferner eine zweite Aufnahmebohrung 7, die die zweite Ventileinheit 4 aufnimmt.

Jede Ventileinheit 3, 4 verfügt über einen länglichen Wandkörper 8, der beim Ausführungsbeispiel ein bezüglich des Ventilgehäuses 5 separater Körper ist und der hier insbesondere hülsenförmig ausgebildet ist. Der Wandkörper 8 der ersten Ventileinheit 3 begrenzt peripher eine längliche erste Ventilkammer 12, während der Wandkörper 8 der zweiten Ventileinheit 4 eine längliche zweite Ventilkammer 13 peripher begrenzt. Die erste Ventilkammer 12 hat eine Längsachse 12c, die zweite Ventilkammer 13 hat eine Längsachse 13c.

Um jeden Wandkörper 8 herum sind mit axialem Abstand zueinander mehrere Dichtungsringe 14 angeordnet, die zwischen der Außenumfangsfläche des Wandkörpers 8 und der Innenumfangsfläche der zugeordneten Aufnahmebohrung 6, 7 statisch abdichten.

Die erste Ventileinheit 3 enthält einen in der ersten Ventilkammer 12 angeordneten ersten Ventilstößel 15, dessen Längsachse 15c mit der Längsachse 12c der ersten Ventilkammer 12 zusammenfällt. Die zweite Ventileinheit 4 enthält einen in der zweiten Ventilkammer 13 angeordneten zweiten Ventilstößel 16, der wie der erste Ventilstößel 15 eine längliche Gestalt hat und dessen Längsachse 16c mit der Längsachse 13c der ersten Ventilkammer 13 zusammenfällt.

Jeder Ventilstößel 15, 16 ist in der zugeordneten Ventilkammer 12, 13 in deren Längsrichtung unter Ausführung einer durch einen Doppelpfeil angedeuteten Steuerbewegung 17 linear hin und her bewegbar.

In jeder der beiden Ventilkammern 12, 13 befindet sich ein zur Längsachse 12a, 13a koaxialer ringförmiger Ventilsitz 18, der axial, also in der Achsrichtung der Längsachse 12a, 13a ausgerichtet ist. Der Ventilsitz 18 umrahmt eine Überströmöffnung 22, die bei der ersten Ventileinheit 3 einen ersten Ventilkammerabschnitt 12a mit einem zweiten Ventilkammerabschnitt 12b verbindet und die bei der zweiten Ventileinheit 4 einen ersten Ventilkammerabschnitt 13a mit einem zweiten Ventilkammerabschnitt 13b verbindet. Die Überströmöffnung 22 liegt also bei beiden Ventileinheiten 3, 4 axial zwischen dem jeweils ersten Ventilkammerabschnitts 12a, 13a und im zweiten Ventilkammerabschnitt 12b, 13b.

Bei jeder Ventileinheit 3, 4 liegt der erste Ventilkammerabschnitt 12a, 13a auf der Seite des Ventilsitzes 18. Mit anderen Worten ist der Ventilsitz 18 dem jeweiligen ersten Ventilkammerabschnitts 12a, 13a zugewandt.

Jeder Ventilstößel 15, 16 erstreckt sich axial durch die zugeordnete Überströmöffnung 22 hindurch und verfügt folglich über einen sich im ersten Ventilkammerabschnitt 12a, 13a erstreckenden ersten Längenabschnitt und über einen sich in dem zweiten Ventilkammerabschnitt 12b, 13b erstreckenden zweiten Längenabschnitt.

Der sich in dem ersten Ventilkammerabschnitt 12a, 13a erstreckende erste Längenabschnitt jedes Ventilstößels 15, 16 weist einen dem Ventilsitz 18 axial gegenüberliegenden Absperrabschnitt 23 auf. Dieser hat bevorzugt die Form eines Ventiltellers 23a mit einander entgegengesetzten ringförmigen Stirnflächen. An der dem Ventilsitz 18 zugewandten Seite verfügt der Absperrabschnitt 23 über eine ringförmige Dichtfläche 23b, die bevorzugt von einem Material mit gummielastischen Eigenschaften gebildet ist. Der Ventilstößel 15, 16 kann eine Schließstellung einnehmen in der er mit seiner Dichtfläche 23b unter Abdichtung axial an dem Ventilsitz 18 anliegt, so dass die Überströmöffnung 22 abgesperrt und die beiden Ventilkammerabschnitte 12a, 12b; 13a, 13b fluiddicht voneinander abgetrennt sind. Eine solche Schließstellung ist in Figur 1 bei der links abgebildeten ersten Ventileinheit 3 illustriert.

Der Ventilstößel 15, 16 kann außerdem in mindestens einer Offenstellung positioniert werden, in der der Absperrabschnitt 23 von dem Ventilsitz 18 abgehoben ist, so dass er zu dem Ventilsitz 18 axial beabstandet ist. In diesem Fall ist die Überströmöffnung 22 offen und es liegt eine Strömungsverbindung zwischen den beiden Ventilkammerabschnitten 12a, 12b; 13a, 13b durch die Überströmöffnung 22 hindurch vor. In Figur 1 nimmt der Ventilstößel 16 der rechts abgebildeten zweiten Ventileinheit 4 eine Offenstellung ein.

Der Ventilstößel 15, 16 ist im Rahmen der Steuerbewegung 17 wahlweise in der Schließstellung oder in der gewünschten Offenstellung positionierbar. Vorzugsweise kann der Ventilstößel 15, 16 in unterschiedlichen Offenstellungen positioniert werden, und zwar bevorzugt stufenlos, die sich durch unterschiedliche axiale Abstände zwischen dem Absperrabschnitt 23 und dem Ventilsitz 18 auszeichnen, so dass sich ein unterschiedlich großer freier Strömungsquerschnitt ergibt. Auf diese Weise kann die Durchflussrate des Druckmediums beeinflusst werden.

Der Ventilsitz 18 ist ortsfest bezüglich des Wandkörpers 8 ausgebildet. Vorzugsweise ist er ein einstückiger Bestandteil dieses Wandkörpers 8.

Jeder Ventilstößel 15, 16 weist an seinem dem ersten Ventilkammerabschnitt 12a, 13a zugeordneten ersten Längenabschnitt einen ersten Verschlussabschnitt 15a, 16a auf, der den ersten Ventilkammerabschnitt 12a, 13a an der der Überströmöffnung 22 axial entgegengesetzten Seite dicht verschließt. An seinem dem zweiten Ventilkammerabschnitt 12b, 13b zugeordneten zweiten Längenabschnitt verfügt jeder Ventilstößel 15, 16 über einen zweiten Verschlussabschnitt 15b, 16b, der den zweiten Ventilkammerabschnitt 12b, 13b an der der Überströmöffnung 22 axial entgegengesetzten Seite ebenfalls dicht verschließt. Diese Verschlussfunktion beeinträchtigt nicht die relative Beweglichkeit des Ventilstößels 15, 16 bezüglich des Wandkörpers 8.

Vorzugsweise ist jeder der Verschlussabschnitte 15a, 15b; 16a, 16b nach Art eines Verschlusskolbens 24 ausgebildet, der unter Abdichtung gleitverschieblich an der Innenumfangsfläche 8a des Wandkörpers 8 anliegt. Jeder Verschlusskolben 24 weist zweckmäßigerweise einen zur Längsachse 15c, 16c koaxialen Dichtungsring 25 auf, der an der Innenumfangsfläche 8a unter Abdichtung gleitverschieblich anliegt. Bevorzugt ist der Dichtungsring ein Lippendichtring, der eine an der Innenumfangsfläche 8a anliegende Dichtlippe hat, deren freies Ende der Überströmöffnung 22 zugewandt ist.

Die beiden Verschlussabschnitte 15a, 15b; 16a, 16b eines jeweiligen Ventilstößels 15, 16 sind mit Abstand zum zugeordneten Absperrabschnitt 23 angeordnet. Zwischen dem ersten Verschlussabschnitt 15a, 16a und dem Absperrabschnitt 23 erstreckt sich ein erster Zwischenabschnitt 26 des Ventilstößels 15, 16. Zwischen dem zweiten Verschlussabschnitt 15b, 16b und dem Absperrabschnitt 23 erstreckt sich ein zweiter Zwischenabschnitt 27 des Ventilstößels 15, 16. Die Durchmesser der Zwischenabschnitte 26, 27 sind kleiner als der Durchmesser D3 der Überströmöffnung 22. Außerdem sind diese Durchmesser zweckmäßigerweise auch kleiner als der Durchmesser D1 des ersten Verschlussabschnittes 15a, 16a und als der Durchmesser D2 des zweiten Verschlussabschnittes 15b, 16b.

Ein vorzugsweise in dem Ventilgehäuse 5 ausgebildeter Verbindungskanal 28 stellt unabhängig von den Schaltstellungen der beiden Ventilstößel 15, 16 eine ständige Fluidverbindung zwischen dem ersten Ventilkammerabschnitt 12a der ersten Ventileinheit 3 und dem zweiten Ventilkammerabschnitt 13b der zweiten Ventileinheit 4 her. Ein von diesem Verbindungskanal 28 abzweigender Arbeitskanal 32, der vorzugsweise ebenfalls in dem Ventilgehäuse 5 ausgebildet ist, führt zu einer außen am Ventilgehäuse 5 angeordneten Arbeitsöffnung 32a, an der ein mittels der Ventilanordnung 1 anzusteuernder Verbraucher, beispielsweise ein fluidbetätigter Antrieb, anschließbar ist. Der Arbeitsöffnung 32a sind hierzu geeignete Anschlussmittel zugeordnet, beispielsweise ein Anschlussgewinde oder auch eine Steckverschraubung.

Folglich kommunizieren der erste Ventilkammerabschnitt 12a der ersten Ventileinheit 3 und der zweite Ventilkammerabschnitt 13b der zweiten Ventileinheit 4 ständig miteinander und zugleich auch mit der Arbeitsöffnung 32a.

Der zweite Ventilkammerabschnitt 12b der ersten Ventilkammer 12 kommuniziert unabhängig von der Schaltstellung des ersten Ventilstößels 15 mit einer Entlastungsöffnung 33a, die mit einer Drucksenke R verbunden ist, bei der es sich insbesondere unmittelbar um die Atmosphäre handelt. Die Entlastungsöffnung 33a ist zweckmäßigerweise außen am Ventilgehäuse 5 angeordnet und definiert das äußere Ende eines Entlastungskanals 33, der ständig mit dem zweiten Ventilkammerabschnitt 12b der ersten Ventilkammer 12 verbunden ist.

Eine mit einer Druckquelle P verbundene oder verbindbare Speiseöffnung 34a kommuniziert unabhängig von der Schaltstellung des zweiten Ventilstößels 16 mit dem ersten Ventilkammerabschnitt 13a der zweiten Ventilkammer 13. Die Speiseöffnung 34a ist zweckmäßigerweiser an einer Außenfläche des Ventilgehäuses 5 angeordnet und bildet das äußere Ende eines Speisekanals 34, der zweckmäßigerweise im Ventilgehäuse 5 ausgebildet ist und andernends mit dem ersten Ventilkammerabschnitt 13a der zweiten Ventilkammer 13 in ständiger Fluidverbindung steht.

Die Druckquelle P stellt ein als Arbeitsfluid verwendetes fluidisches Druckmedium zur Verfügung, bei dem es sich insbesondere um Druckluft handelt.

Der Verbindungskanal 28, der Entlastungskanal 33 und der Speisekanal 34 münden zweckmäßigerweise jeweils peripher, also am radialen Außenumfang in den zugeordneten Ventilkammerabschnitt der Ventilkammer 12 bzw. 13 ein. Dabei durchsetzen die genannten Fluidkanäle den Wandkörper 8.

Die beiden Ventileinheiten 3, 4 sind in einer aufeinander abgestimmten Weise betreibbar, um dem an die Arbeitsöffnung 32a angeschlossenen Verbraucher das vorgenannte Arbeitsmedium zuzuführen oder um das Arbeitsmedium aus dem Verbraucher wieder abzuführen.

In diesem Zusammenhang kann die Ventilanordnung 1 unter anderem den in Figur 1 illustrierten ersten Betriebszustand einnehmen, in dem der erste Ventilstößel 15 die Schließstellung und der zweite Ventilstößel 16 eine Offenstellung aufweist. Auf diese Weise strömt gemäß der durchgehenden Strömungslinie 35 Arbeitsfluid von der Druckquelle P durch den Speisekanal 34, den ersten Ventilkammerabschnitt 13a, die offene Überströmöffnung 22, den zweiten Ventilkammerabschnitt 13b, den Verbindungskanal 28 und den Arbeitskanal 32 hindurch zur Arbeitsöffnung 32a und von dort zum Verbraucher. Der Fluiddurchgang durch die Überströmöffnung 22 der ersten Ventileinheit 3 ist dabei abgesperrt.

In einer zweiten möglichen Betriebsstellung der Ventilanordnung 1 befindet sich der erste Ventilstößel 15 in einer Offenstellung und der zweite Ventilstößel 16 nimmt die Schließstellung ein. In diesem Fall ist die Druckquelle P durch die zweite Ventileinheit 4 vom Verbindungskanal 28 abgetrennt, während gleichzeitig die Arbeitsöffnung 32a über den Arbeitskanal 32, den Verbindungskanal 28, den ersten Ventilkammerabschnitt 12a, die Überströmöffnung 22 der ersten Ventileinheit 3, den zweiten Ventilkammerabschnitt 12b und den Entlastungskanal 33 mit der Entlastungsöffnung 33a verbunden ist. Letzteres führt zu einer strichpunktiert angedeuteten Entlastungsströmung 36 des vom Verbraucher kommenden Arbeitsfluides zur Drucksenke R.

Wie schon erwähnt, ist in jeder der beiden Betriebsstellungen eine Variation der Offenstellung des geöffneten Ventilstößels möglich, um die Strömungsrate zu beeinflussen.

Vorzugsweise ist auch noch eine dritte Betriebsstellung der Ventilanordnung 1 möglich, in der beide Ventilstößel 15, 16 die Schließstellung einnehmen, so dass die Arbeitsöffnung 32a sowohl von der Speiseöffnung 34a als auch von der Entlastungsöffnung 33a fluiddicht abgetrennt ist.

Um die jeweils gewünschte Schaltstellung einzunehmen, ist jeder Ventilstößel 15, 16 mit einer variablen Antriebskraft FA beaufschlagbar, was in Figur 1 durch Doppelpfeile symbolisiert ist. Die Ventilanordnung 1 ist zweckmäßigerweise mit einer elektrisch betätigbaren Steuereinrichtung 37 ausgestattet, die in der Lage ist, die Beaufschlagung der Ventilstößel 15, 16 mit der Antriebskraft FA zu steuern, um auf diese Weise die gewünschte Steuerbewegung 17 hervorzurufen und jeden Ventilstößel 15, 16 in der gewünschten Schaltstellung zu positionieren.

Um eine definierte Grundstellung zu erhalten, ist es zweckmäßig, wenn jede Ventileinheit 3, 4 mit eigenen Federmitteln 38 ausgestattet ist, die den zugeordneten Ventilstößel 15, 16 ständig in Richtung der Schließstellung beaufschlagen, so dass der Ventilstößel 15, 16 die Schließstellung einnimmt, wenn keine Antriebskraft FA auf ihn einwirkt. Die Wirkrichtung der Antriebskraft FA ist entgegengesetzt zur Federkraft der Federmittel 38 gerichtet.

Zweckmäßigerweise wirken die Federmittel 38 zwischen dem Wandkörper 8 und dem jeweils zugeordneten Ventilstößel 15, 16. Exemplarisch sind die Federmittel 38 beider Ventileinheiten 3, 4 von einer Druckfeder 38a gebildet, die axial im Anschluss an den Ventilstößel 15, 16 angeordnet ist, und zwar im Anschluss an den zweiten Verschlussabschnitt 15a, 16a. Die Druckfeder 38a stützt sich axial einerseits an dem ersten Verschlussabschnitt 15a, 16a ab und andererseits an einem hierzu beabstandeten Abstützwandabschnitt 42 des Wandkörpers 8.

Eine konstruktive Besonderheit der Ventilanordnung 1 besteht darin, dass bei beiden Ventileinheiten 3, 4 der Durchmesser D1 des ersten Verschlussabschnittes 15a, 16a des Ventilstößels 15, 16 gleich groß ist wie der Durchmesser D2 des zweiten Verschlussabschnittes 15b, 16b des gleichen Ventilstößels 15, 16. Diese Durchmesser entsprechen den Innendurchmessern derjenigen Längenabschnitte der Ventilkammern 12, 13, mit denen die Verschlussabschnitte 15a, 15b, 16a, 16b zum axialen Verschließen der Ventilkammern 12, 13 unter Abdichtung zusammenwirken. Hinzukommt, dass der Durchmesser D3 der Überströmöffnung 22, d.h. der Durchmesser des Ventilsitzes 18 entweder gleich groß ist wie jeder der vorgenannten Durchmesser D1, D2 oder aber geringfügig größer ist wie jeder dieser beiden Durchmesser D1, D2. Dies hat zur Folge, dass jeder Ventilstößel 15, 16 zum einen in jeder Offenstellung vollständig druckkraftkompensiert ist und zum anderen auch in der Schließstellung entweder vollständig druckkraftkompensiert ist oder eine geringfügige resultierende Schließkraft erfährt, die aus dem in der Schließstellung im ersten Ventilkammerabschnitt 12a, 13a herrschenden Druck in Verbindung mit der aus dem Durchmesserunterschied resultierenden Flächendifferenz herrührt.

Ein bevorzugter Aufbau sieht den erwähnten geringfügigen Durchmesserunterschied zwischen dem Durchmesser D3 der Überströmöffnung und den etwas kleineren Durchmessern D1, D2 der beiden Verschlussabschnitte 15a, 15b; 16a, 16b vor, da hier der Absperrabschnitt 23 in der Schließstellung zunehmend stärker an den Ventilsitz 18 angedrückt wird, je größer der im ersten Ventilkammerabschnitt 12a, 13a herrschende Fluiddruck ist. Auf diese Weise wird ohne konstruktive Änderung auch bei sich verändernden Druckbedingungen eine zuverlässige Dichtheit in der Schließstellung der Ventilstößel 15, 16 gewährleistet.

Die weiter oben geschilderte Kanalverschaltung hat die vorteilhafte Auswirkung, dass sowohl die Speiseströmung 35 als auch die Entlastungsströmung 36 die zugeordnete offene Überströmöffnung 22 von der Seite des ersten Ventilkammerabschnittes 12a, 13a, d.h. von der Seite des Ventilsitzes 18 her durchströmt. Wie sich gezeigt hat, wirkt sich bei dieser Strömungsrichtung die Fluidströmung kräftemäßig nicht oder zumindest nicht relevant auf den Absperrabschnitt 23 aus, was die Steuerung oder gar Regelung der Antriebskraft FA erleichtert.

Die beiden zur gleichen Ventilsteuergruppe 2 gehörenden Ventileinheiten 3, 4 sind zweckmäßigerweise mit zueinander parallelen Längsachsen nebeneinander angeordnet, und zwar insbesondere derart, dass ihre Ventilsitze 18 in die gleiche axiale Richtung weisen. Dies hat zur Folge, dass die ersten Verschlussabschnitte 15a, 15b untereinander in die gleiche Richtung weisen und dass die zweiten Verschlussabschnitte 15b, 16b untereinander ebenfalls in die gleiche Richtung weisen. Wenn dann die Ventileinheiten 3, 4 in Achsrichtung der Längsachsen 12c, 13c auf gleicher Höhe platziert sind, liegen sowohl die ersten Ventilkammerabschnitte 12a, 13a als auch die zweiten Ventilkammerabschnitte 12b, 13b untereinander auf gleicher axialer Höhe. Vorteilhaft ist es insbesondere in diesem Zusammenhang, wenn die beiden Ventileinheiten 3, 4 untereinander identisch ausgebildet sind.

Auf diese Weise lassen sich die beiden Ventileinheiten 3, 4 der Ventilsteuergruppe 2 platzsparend auf engstem Raum in das Ventilgehäuse 5 integrieren.

Der Verbindungskanal 8 hat dabei vorzugsweise einen zumindest im Wesentlichen S-förmigen Verlauf. Durch diesen Verlauf wird der axiale Versatz zwischen dem ersten Ventilkammerabschnitt 12a der ersten Ventileinheit 3 und dem zweiten Ventilkammerabschnitt 13b der zweiten Ventileinheit 4, die durch den Verbindungskanal 28 miteinander verbunden sind, in besonders strömungsgünstiger Weise überbrückt.

Der Arbeitskanal 32 zweigt zweckmäßigerweise im längsmittigen Bereich des Verbindungskanals 28 von diesem Verbindungskanal 28 ab.

Das Ventilgehäuse 5 hat zweckmäßigerweise eine Montagefläche 43, zu der hin die beiden Aufnahmebohrungen 6, 7 offen sind. Die Ventileinheiten 3, 4 sind so ausgerichtet, dass die zweiten Verschlussabschnitte 15b, 16b der Ventilstößel 15, 16 dieser Montagefläche 43 zugeordnet sind. An der Montagefläche 43 ist zweckmäßigerweise die schon erwähnte Steuereinrichtung 37 angeordnet, die folglich optimal mit den beiden Ventileinheiten 3, 4 zusammenwirken kann.

Bevorzugt ist die Steuereinrichtung 37 in einem als Steuergehäuse 44 bezeichneten Gehäuse untergebracht, das im Bereich der Montagefläche 43 an das Ventilgehäuse 5 angebaut ist.

Die Ventileinheiten 3, 4 sind bevorzugt vom mittels Fluidkraft betätigbaren Typ. Dies trifft auf das Ausführungsbeispiel zu. In diesem Zusammenhang verfügt jeder Ventilstößel 15, 16 über einen Antriebskolben 45, der eine in die entgegengesetzte axiale Richtung wie der Ventilsitz 18 weisende Antriebsfläche 46 aufweist, die gesteuert mit einem die Antriebskraft FA liefernden Antriebsfluid beaufschlagbar ist.

Die Antriebsfläche 46 ist entweder zur direkten oder zur indirekten Fluidbeaufschlagung durch das Antriebsfluid ausgebildet. Beim Ausführungsbeispiel liegt eine Ausgestaltung zur indirekten Fluidbeaufschlagung vor, die sich darin äußert, dass der Antriebsfläche 46 des Antriebskolbens 45 ein elastisch verformbares Membranelement 47 vorgelagert ist, das unter statischer Abdichtung an dem Wandkörper 8 fixiert ist und das durch das Antriebsfluid beaufschlagbar ist, so dass es an die Antriebsfläche 46 des Antriebskolbens 45 angedrückt wird und diesen vor sich herschieben kann.

Als vorteilhaft wird es angesehen, wenn bei jedem Ventilstößel 15, 16 der Antriebskolben 45 in Baueinheit mit dem zweiten Verschlussabschnitt 12b, 13b ausgebildet ist.

Die Steuereinrichtung 37 enthält exemplarisch eine elektrisch betätigbare Vorsteuerventileinrichtung 48, die sich aus mehreren Komponenten zusammensetzen kann und die durch eine elektronische Steuereinheit 49 elektrisch ansteuerbar ist, die vorzugsweise zumindest partiell ein Bestandteil der Steuereinrichtung 37 ist.

Die Vorsteuerventileinrichtung 48 ist fluidisch mit den beiden Ventileinheiten 3, 4 verbunden und ist in der Lage, auf der Grundlage von elektrischen Steuersignalen die Beaufschlagung der Antriebskolben 45 mit dem erwähnten Antriebsfluid zu steuern. Die elektrischen Steuersignale stammen von der Steuereinheit 49, die bei der Erzeugung der elektrischen Steuersignale auf Rückmeldesignale zurückgreifen kann, die den aktuellen Betriebszustand der Ventileinheiten 3, 4 und/oder des an die Arbeitsöffnung 32a angeschlossenen Verbrauches wiederspiegeln. Die in die Steuereinrichtung 37 integrierte Steuereinheit 49 ist auch vorzugsweise so ausgebildet, dass sie mit einer nicht abgebildeten externen elektronischen Steuereinrichtung kommunizieren kann.

Vorzugsweise ist die Steuereinrichtung 37, die beim Ausführungsbeispiel eine elektro-fluidische Steuereinrichtung ist, in einer Weise ausgebildet, dass sie die momentane Schaltstellung der Ventilstößel 15, 16 verarbeiten kann. Hierzu ist es vorteilhaft, wenn jedem Ventilstößel 15, 16 ein an die Steuereinheit 49 angeschlossenes Wegmesssystem 52 zugeordnet ist, das zur Erfassung der momentanen Schaltstellung des betreffenden Ventilstößels 15, 16 ausgebildet ist.

Auf der Basis der Messwerte des Wegmesssystems 52 und unter ergänzender Berücksichtigung externer Rückmeldedaten, insbesondere Positionsdaten eines anzusteuernden Verbrauchers, ist die Steuereinheit 49 in der Lage, die Vorsteuerventileinrichtung 48 so anzusteuern, dass die Ventilstößel 15, 16 der beiden Ventileinheiten 3, 4 bedarfsgemäß positioniert werden.

Die Steuereinrichtung 37 ist vorzugsweise eine Proportional-Steuereinrichtung, die eine stufenlose Bewegung und Positionierung der Ventilstößel 15, 16 ermöglich, so dass insbesondere auch unterschiedliche Offenzustände der beiden Ventilstößel 15, 16 einstellbar sind.

Die Ventileinheiten 3, 4 sind vorzugsweise patronenartig ausgebildet und sind jeweils als Baueinheit in die zugeordnete Aufnahmebohrung 6, 7 des Ventilgehäuses 5 eingesetzt. Dabei ist jede Ventileinheit 3,4 schon vor dem Einsetzen in die Aufnahmebohrung 6, 7 eine in sich zusammenhaltende Baugruppe, die den hülsenförmig ausgebildeten Wandkörper 8 und den betriebsbereit in diesen Wandkörper eingebauten Ventilstößel 15, 16 enthält. Dabei ist der Ventilstößel 15, 16 durch axialen Formschluss mit dem Wandkörper 8 unverlierbar in der von dem Wandkörper 8 definierten Ventilkammer 12, 13 festgehalten.

Der axial wirkende Formschluss zwischen den vorgenannten Komponenten 8, 15, 16 der Ventileinheit 3, 4 resultiert beim Ausführungsbeispiel daraus, dass sich der Ventilstößel 15, 16 mit seinem Absperrabschnitt 23 in der einen Richtung an dem zugeordneten Ventilsitz 18 abstützt und in der entgegengesetzten Richtung durch die Federmittel 38 festgehalten wird.

Damit die auch als Ventilpatronen bezeichenbaren patronenartigen Ventileinheiten 3, 4 leicht zusammenbaubar sind, ist es von Vorteil, wenn der Wandkörper 8 eine mehrteilige Struktur hat. Am Ausführungsbeispiel hat er einen Hülsenabschnitt 53 und einen Kappenabschnitt 54, die axial ineinander eingesteckt und miteinander verpresst und/oder verklebt und/oder verschweißt sind. Der Kappenabschnitt 54 enthält den Abstützwandabschnitt 42. Vor dem Zusammenfügen des Hülsenabschnittes 53 und des Kappenabschnittes 54 werden der Ventilstößel 15, 16 und die Federmittel 38 eingesetzt.

Auch der Ventilstößel 15, 16 ist zweckmäßigerweise mehrteilig ausgebildet und setzt sich insbesondere aus zwei axial zusammengefügten Ventilstößelabschnitten zusammen, die insbesondere durch eine Pressverbindung und/oder Schweißverbindung und/oder Klebeverbindung miteinander verbunden sind.

Bei einem nicht illustrierten Ausführungsbeispiel ist der Wandkörper der Ventileinheiten 3, 4 unmittelbar von dem Ventilgehäuse 5 gebildet, wobei die Aufnahmebohrungen 6, 7 jeweils unmittelbar eine einen Ventilstößel 15, 16 aufnehmende Ventilkammer 12, 13 definieren.

Die in Figur 2 illustrierte Ventilanordnung 1 enthält außer einer Ventilsteuergruppe 2 der bisher geschilderten Bauart noch eine weitere Ventilsteuergruppe 2a, deren Aufbau demjenigen der beschriebenen Ventilsteuergruppe 2 entspricht. Eine solche Ventilanordnung 1 enthält zwei Arbeitsöffnungen 32a, die unabhängig voneinander mittels der jeweils zugeordnete Ventilsteuergruppe 2, 2a mit Arbeitsfluid versorgbar oder druckmäßig entlastbar sind und die sich beispielsweise dafür eignen, einen Verbraucher in Gestalt eines doppeltwirkenden Arbeitszylinders anzuschließen. Es versteht sich, dass die Steuereinrichtung 37 in diesem Fall so ausgebildet ist, dass sie beide Ventilsteuergruppen 2, 2a in der oben geschilderten Weise ansteuern kann.

Die beiden Ventilsteuergruppen 2 verfügen zweckmäßigerweise über ein gemeinsames Ventilgehäuse 5. Dieses Ventilgehäuse 5 kann insbesondere vier Aufnahmebohrungen aufweisen, in die jeweils eine patronenartig ausgebildete Ventileinheit 3, 4 eingesetzt ist.

Bei einer Ventilanordnung 1, die eine Mehrfachausstattung an Ventilsteuergruppen 2 aufweist, ist es zweckmäßig, außen an dem Ventilgehäuse weiterhin nur eine einzige Speiseöffnung 34a vorzusehen, die jedoch mit dem ersten Ventilkammerabschnitt jeder zweiten Ventileinheiten 4 kommuniziert. Ebenso ist es vorteilhaft, die zweiten Ventilkammerabschnitte 15b der ersten Ventileinheiten 3 mit einer gemeinsamen Entlastungsöffnung 33a zu verbinden. Für die entsprechende interne Fluidverbindung im Ventilgehäuse 5 sind dabei ein Sammel-Speisekanal 55 und ein Sammel-Entlastungskanal 56 vorgesehen.

Für alle Ausführungsbeispiele der Ventilanordnung 1 gilt, dass die Entlastungsöffnung 33a und die Speiseöffnung 34a abweichend von den Illustrationen zweckmäßigerweise an ein und derselben Außenfläche des Ventilgehäuses 5 angeordnet sind, so dass es möglich ist, die Ventilanordnung 1 mit dieser Außenfläche voraus an einem Verteilerkörper zu montieren. Es besteht dann auch die vorteilhafte Möglichkeit, mehrere der Ventilanordnungen 1 batterieartig aneinandergereiht an einem solchen Verteilerkörper anzubringen.

## Patentansprüche

1. Ventilanordnung, mit wenigstens einer Ventilsteuergruppe (2, 2a), die zwei fluidisch miteinander verschaltete erste und zweite Ventileinheiten (3, 4) enthält, die jeweils eine peripher von einem Wandkörper (8) begrenzte längliche Ventilkammer (12, 13) und einen in der Ventilkammer (12, 13) axial verschiebbar angeordneten Ventilstößel (15, 16) aufweisen, wobei in jeder Ventilkammer (12, 13) ein bezüglich des Wandkörpers (8) ortsfester, axial orientierter Ventilsitz (18) angeordnet ist, der eine Überströmöffnung (22) umrahmt, die einen auf der Seite des Ventilsitzes (18) liegenden ersten Ventilkammerabschnitt (12a, 13a) mit einem auf der entgegengesetzten Seite liegenden zweiten Ventilkammerabschnitt (12b, 13b) verbindet, wobei dem Ventilsitz (18) in dem ersten Ventilkammerabschnitt (12a, 13a) ein Absperrabschnitt (23) des Ventilstößels (15, 16) gegenüberliegt, der im Rahmen einer axialen Steuerbewegung (17) des Ventilstößels (15, 16) zwischen einer am Ventilsitz (18) anliegenden und dadurch die Überströmöffnung (22) verschließenden Schließstellung und mindestens einer von dem Ventilsitz (18) abgehobenen und dadurch einen Fluidübertritt zwischen den beiden Ventilkammerabschnitten (12a, 12b; 13a, 13b) ermöglichenden Offenstellung bewegbar ist, wobei der erste Ventilkammerabschnitt (12a) der ersten Ventileinheit (3) und der zweite Ventilkammerabschnitt (13b) der zweiten Ventileinheit (4) miteinander und mit einer mit einem Verbraucher verbindbaren Arbeitsöffnung (32) in ständiger Fluidverbindung stehen, und wobei jeder Ventilstößel (15, 16) die ihm zugeordnete Überströmöffnung (22) durchsetzt und einen den ersten Ventilkammerabschnitt (12a, 13a) an der der Überströmöffnung (22) axial entgegengesetzten Seite dicht verschließenden ersten Verschlussabschnitt (15a, 16a) sowie einen den zweiten Ventilkammerabschnitt (12b, 13b) an der der Überströmöffnung (22) axial entgegengesetzten Seite dicht verschließenden zweiten Verschlussabschnitt (15b, 16b) aufweist, wobei die Durchmesser (D1, D2) der beiden Verschlussabschnitte (16a, 16b) jedes Ventilstößels (15, 16) untereinander gleich groß sind und außerdem gleich groß oder geringfügig kleiner sind als der Durchmesser (D3) der Überströmöffnung (22),
- wobei der zweite Ventilkammerabschnitt (12b) der ersten Ventileinheit (3) mit einer zu einer Drucksenke (R) führbaren Entlastungsöffnung (33a) und der erste Ventilkammerabschnitt (13a) der zweiten Ventileinheit (4) mit einer mit einer Druckquelle (P) verbindbaren Speiseöffnung (34a) kommuniziert,
- wobei die Ventilanordnung (1) eine elektrisch betätigbare Steuereinrichtung (37) enthält, die ausgebildet ist, um die Ventilstößel (15, 16) zum Zwecke des Hervorrufens ihrer Steuerbewegung (17) und zur Vorgabe ihrer jeweiligen Schaltstellung gesteuert mit einer Antriebskraft (FA) zu beaufschlagen,
- und wobei die Ventileinheiten (3, 4) von durch Fluidkraft betätigbarer Bauart sind, wobei die Steuereinrichtung (37) eine elektro-fluidische Steuereinrichtung ist, die eine elektrisch betätigbare Vorsteuerventileinrichtung (48) enthält, die ausgebildet ist, um auf der Grundlage von elektrischen Steuersignalen, die von einer elektronischen Steuereinheit (49) der Steuereinrichtung (37) stammen, die Ventilstößel (15, 16) gesteuert mit einem die Antriebskraft (FA) liefernden Antriebsfluid zu beaufschlagen,
**dadurch gekennzeichnet,**
- **dass** die Steuereinrichtung (37) eine Proportional-Steuereinrichtung ist, durch die die Ventilstößel (15, 16) stufenlos wahlweise in der Schließstellung sowie in mehreren, unterschiedliche Strömungsquerschnitte der Überströmöffnung (22) freigebenden Offenstellungen positionierbar sind,
- wobei die Steuereinrichtung (37) für jede Ventileinheit (3, 4) ein die momentane Schaltstellung des Ventilstößels (15, 16) erfassendes Wegmesssystem (52) enthält,
- wobei die Steuereinheit (49) in der Lage ist, auf der Basis der Messwerte des Wegmesssystems (52) und unter ergänzender Berücksichtigung externer Rückmeldedaten die Vorsteuerventileinrichtung (48) so elektrisch anzusteuern, dass die Ventilstößel (15, 16) der beiden Ventileinheiten (3, 4) bedarfsgemäß positioniert werden.

2. Ventilanordnung nach Anspruch 1, **dadurch gekennzeichnet, dass** der Absperrabschnitt (23) jedes Ventilstößels (15, 16) als Ventilteller (23a) ausgebildet ist, der in dem ersten Ventilkammerabschnitt (12a, 13a) mit axialem Abstand zum ersten Verschlussabschnitt (15a, 16a) des Ventilstößels (15, 16) angeordnet ist.

3. Ventilanordnung nach Anspruch 1 oder 2, **dadurch gekennzeichnet, dass** die Verschlussabschnitte (15a, 15b; 16a, 16b) jedes Ventilstößels (15, 16) als unter Abdichtung gleitverschieblich an der Innenumfangsfläche (8a) des Wandkörpers (8) anliegende Verschlusskolben (24) ausgebildet sind.

4. Ventilanordnung nach einem der Ansprüche 1 bis 3, **dadurch gekennzeichnet, dass** jedem Ventilstößel (15, 16) Federmittel (38) der Ventileinheit (3, 4) zugeordnet sind, die den Ventilstößel (15, 16) in Richtung der Schließstellung vorspannen.

5. Ventilanordnung nach einem der Ansprüche 1 bis 4, **dadurch gekennzeichnet, dass** sie ein die Ventilstößel (15, 16) aufnehmendes Ventilgehäuse (5) aufweist, an das ein die Steuereinrichtung (37) aufnehmendes Steuergehäuse (44) angebaut ist.

6. Ventilanordnung nach einem der Ansprüche 1 bis 5, **dadurch gekennzeichnet, dass** jeder Ventilstößel (15, 16) einen gesteuert mit einem Antriebsfluid beaufschlagbaren Antriebskolben (45) aufweist, der zweckmäßigerweise in Baueinheit mit einem der Verschlussabschnitte (16a, 16b) ausgebildet ist.

7. Ventilanordnung nach einem der Ansprüche 1 bis 6, **dadurch gekennzeichnet, dass** die beiden Ventileinheiten (3, 4) der Ventilsteuergruppe (2, 2a) mit zueinander parallelen Längsachsen (12c, 15c, 13c, 16c) nebeneinander und dabei in Achsrichtung dieser Längsachsen (12c, 15c, 13c, 16c) auf gleicher Höhe angeordnet sind, wobei sie so ausgerichtet sind, dass ihre Ventilsitze (18) in die gleiche axiale Richtung weisen und wobei die beiden Ventileinheiten (3, 4) der Ventilsteuergruppe (2, 2a) zweckmäßigerweise untereinander identisch ausgebildet sind.

8. Ventilanordnung nach Anspruch 7, **dadurch gekennzeichnet, dass** die beiden Ventilstößel (15, 16) jeder Ventilsteuergruppe (2, 2a) in einem gemeinsamen, bevorzugt einstückigen Ventilgehäuse (5) angeordnet sind, in dem ein den ersten Ventilkammerabschnitt (12a) der ersten Ventileinheit (3) mit dem zweiten Ventilkammerabschnitt (13b) der zweiten Ventileinheit (4) verbindender Verbindungskanal (28) ausgebildet ist, von dem ein zu der Arbeitsöffnung (32a) führender Arbeitskanal (32) abzweigt und der zweckmäßigerweise einen zumindest im Wesentlichen S-förmigen Verlauf hat.

9. Ventilanordnung nach Anspruch 8, **dadurch gekennzeichnet, dass** die beiden Ventileinheiten (3, 4) patronenartig ausgebildet und jeweils axial in eine Aufnahmebohrung (6, 7) des Ventilgehäuses (5) eingesetzt sind, wobei jede Ventileinheit (3, 4) einen hülsenförmigen Wandkörper (8) aufweist, in dem der zugehörige Ventilstößel (15, 16) unverlierbar fixiert ist.

10. Ventilanordnung nach einem der Ansprüche 1 bis 9, **dadurch gekennzeichnet, dass** sie zwei Ventilsteuergruppen (2, 2a) enthält, wobei die ersten Ventilkammerabschnitte (13a) der zweiten Ventileinheiten (4) der beiden Ventilsteuergruppen (2, 2a) gemeinsam mit einer mit einer Druckquelle (P) verbindbaren Speiseöffnung (34a) kommunizieren und wobei zweckmäßigerweise die zweiten Ventilkammerabschnitte (12b) der ersten Ventileinheiten (3) der beiden Ventilsteuergruppen (2, 2a) gemeinsam mit einer zu einer Drucksenke (R) führbaren Entlastungsöffnung (33a) kommunizieren.

## Claims

1. Valve assembly with at least one valve control group (2, 2a) containing first and second valve units (3, 4), which are interconnected fluidically and each of which has an oblong valve chamber (12, 13) peripherally bounded by a wall body (8) and a valve plunger (15, 16) axially displaceable in the valve chamber (12, 13), wherein in each valve chamber (12, 13) there is located an axially oriented valve seat (18), which is stationary with respect to the wall body (8) and frames an overflow opening (22) connecting a first valve chamber section (12a, 13a) located on the side of the valve seat (18) to a second valve chamber section (12b, 13b) located on the opposite side, wherein opposite the valve seat (18) in the first valve chamber section (12a, 13a) there is located a shutoff section (23) of the valve plunger (15, 16), which shutoff section (23) can be moved within an axial control movement (17) of the valve plunger (15, 16) between a closed position bearing against the valve seat (18) and thus closing the overflow opening (22) and at least one open position lifted off the valve seat (18) and thus allowing a fluid transfer between the two valve chamber sections (12a, 12b; 13a, 13b), wherein the first valve chamber section (12a) of the first valve unit (3) and the second valve chamber section (13b) of the second valve unit (4) are in constant fluid connection with each other and with a working opening (32) connectable to a user, and wherein each valve plunger (15, 16) passes through the associated overflow opening (22) and has a first closure section (15a, 16a) tightly closing the first valve chamber section (12a, 13a) on the side axially opposite the overflow opening (22) and a second closure section (15b, 16b) tightly closing the second valve chamber section (12b, 13b) on the side axially opposite the overflow opening (22), wherein the diameters (D1, D2) of the two closure sections (16a, 16b) of each valve plunger (15, 16) are the same as each other and moreover the same as or slightly smaller than the diameter (D3) of overflow opening (22),
- wherein the second valve chamber section (12b) of the first valve unit (3) communicates with a relief opening (33a), which can be routed to a pressure sink (R), and the first valve chamber section (13a) of the second valve unit (4) communicates with a feed opening (34a), which can be connected to a pressure source (P),
- wherein the valve assembly (1) contains an electrically actuable control device (37) designed to apply a drive force (FA) to the valve plungers (15, 16) for the purpose of inducing their control movement (17) and for predetermining their respective switching position,
- and wherein the valve units (3, 4) are of a design that can be actuated by fluid power, wherein the control device (37) is an electro-fluidic control device containing an electrically actuable pilot valve device (48) designed to apply a drive fluid delivering the drive force (FA) in a controlled manner to the valve plungers (15, 16) based on electric control signals originating from an electronic control unit (49) of the control device (37),
**characterised in that**
- the control device (37) is a proportional control device by means of which the valve plungers (15, 16) can be positioned in an infinitely variable manner optionally in the closed position and in several open positions opening up different flow cross-sections of the overflow opening (22),
- wherein the control device (37) contains a distance measuring system (52) detecting the current switching position of the valve plunger (15, 16) for each valve unit (3, 4),
- wherein the control unit (49) is capable of electrically controlling the pilot valve device (48) on the basis of the measured values of the distance measuring system (52) and additionally taking into account external feedback data in such a way that the valve plungers (15, 16) of the two valve unit (3, 4) are positioned as required.

2. Valve assembly according to claim 1, **characterised in that** the shutoff section (23) of each valve plunger (15, 16) is designed as a valve disc (23a) located in the first valve chamber section (12a, 13a) at an axial distance from the first closure section (15a, 16a) of the valve plunger (15, 16).

3. Valve assembly according to claim 1 or 2, **characterised in that** the closure sections (15a, 15b; 16a, 16b) of each valve plunger (15, 16) are designed as closure pistons (24) bearing against the inner circumferential surface (8a) of the wall body (8) in a slidable manner while forming a seal.

4. Valve assembly according to any of claims 1 to 3, **characterised in that** each valve plunger (15, 16) is assigned spring means (38) of the valve unit (3, 4), which spring means (38) preload the valve plunger (15, 16) towards the closed position.

5. Valve assembly according to any of claims 1 to 4, **characterised in that** it has a valve housing (5), which accommodates the valve plungers (15, 16) and to which a control housing (44) accommodating the control device (37) is attached.

6. Valve assembly according to any of claims 1 to 5, **characterised in that** each valve plunger (15, 16) has a drive piston (45), to which a drive fluid can be applied in a controlled manner and which is expediently designed as a modular unit with one of the closure sections (16a, 16b).

7. Valve assembly according to any of claims 1 to 6, **characterised in that** the two valve units (3, 4) of the valve control group (2, 2a) are arranged adjacent to each other with mutually parallel longitudinal axes (12c, 15c, 13c, 16c) at the same level in the axial direction of said longitudinal axes (12c, 15c, 13c, 16c), wherein they are oriented such that their valve seats (18) point in the same axial direction, and wherein the two valve units (3, 4) of the valve control group (2, 2a) are expediently designed identically.

8. Valve assembly according to claim 7, **characterised in that** the two valve plunger (15, 16) of each valve control group (2, 2a) are located in a common, preferably one-piece, valve housing (5), in which there is formed a connecting passage (28), which connects the first valve chamber section (12a) of the first valve unit (3) to the second valve chamber section (13b) of the second valve unit (4) and from which a working passage (32) leading to the working opening (32a) branches off and which expediently has an at least substantially S-shaped course.

9. Valve assembly according to claim 8, **characterised in that** the two valve units (3, 4) are of a cartridge-type design and each is axially installed into a reception bore (6, 7) of the valve housing (5), each valve unit (3, 4) having a sleeve-shaped wall body (8), in which the associated valve plunger (15, 16) is fixed captively.

10. Valve assembly according to any of claims 1 to 9, **characterised in that** it contains two valve control groups (2, 2a), wherein the first valve chamber sections (13a) of the second valve units (4) of the two valve control groups (2, 2a) together communicate with a feed opening (34a) connectable to a pressure source (P) and wherein the second valve chamber sections (12b) of the first valve units (3) of the two valve control groups (2, 2a) expediently together communicate with a relief opening (33a), which can be routed to a pressure sink (R).

## Revendications

1. Ensemble de soupapes, avec au moins un groupe de commande de soupape (2, 2a), qui contient deux unités de soupape (3, 4), une première et une seconde, branchées entre elles de manière fluidique, qui présentent respectivement une chambre de soupape (12, 13) allongée délimitée en périphérie par un corps de paroi (8) et un poussoir de soupape (15, 16) disposé de manière à pouvoir coulisser axialement dans la chambre de soupape (12, 13), dans lequel est disposé dans chaque chambre de soupape (12, 13) un siège de soupape (18) orienté axialement, stationnaire par rapport au corps de paroi (8), qui encadre une ouverture de trop-plein (22), qui relie une première section de chambre de soupape (12a, 13a) située sur le côté du siège de soupape (18) à une seconde section de chambre de soupape (12b, 13b) située sur le côté opposé, dans lequel une section de verrouillage (23) du poussoir de soupape (15, 16), qui peut être déplacée dans le cadre d'un déplacement de commande axial (17) du poussoir de soupape (15, 16) entre une position de fermeture reposant sur le siège de soupape (18) et fermant ainsi l'ouverture de trop-plein (22) et au moins une position d'ouverture relevée du siège de soupape (18) et permettant ainsi un passage de fluide entre les deux sections de chambre de soupape (12a, 12b; 13a, 13b), fait face au siège de soupape (18) dans la première section de chambre de soupape (12a, 13a), dans lequel la première section de chambre de soupape (12a) de la première unité de soupape (3) et la seconde section de chambre de soupape (13b) de la seconde unité de soupape (4) sont en communication fluidique permanente l'une avec l'autre et avec une ouverture de travail (32) pouvant être reliée à un consommateur, et dans lequel chaque poussoir de soupape (15, 16) traverse l'ouverture de trop-plein (22) qui lui est associée et présente une première section de fermeture (15a, 16a) fermant de manière étanche la première section de chambre de soupape (12a, 13a) sur le côté axialement opposé à l'ouverture de trop-plein (22) ainsi qu'une seconde section de fermeture (15b, 16b) fermant de manière étanche la seconde section de chambre de soupape (12b, 13b) sur le côté axialement opposé à l'ouverture de trop-plein (22), dans lequel les diamètres (D1, D2) des deux sections de fermeture (16a, 16b) de chaque poussoir de soupape (15, 16) sont aussi grands les uns que les autres et sont par ailleurs aussi grands que ou légèrement inférieurs au diamètre (D3) de l'ouverture de trop-plein (22),
- dans lequel la seconde section de chambre de soupape (12b) de la première unité de soupape (3) communique avec une ouverture de décharge (33a) pouvant mener vers un puits de pression (R) et la première section de chambre de soupape (13a) de la seconde unité de soupape (4) communique avec une ouverture d'alimentation (34a) pouvant être reliée à une source de pression (P),
- dans lequel l'ensemble de soupapes (1) contient un système de commande (37) pouvant être actionné électriquement, qui est réalisé pour soumettre à l'action d'une force d'entraînement (FA) les poussoirs de soupape (15, 16) dans le but de provoquer son déplacement de commande (17) et pour spécifier leur position de commutation respective,
- et dans lequel les unités de soupape (3, 4) sont du type pouvant être actionné par la force d'un fluide, dans lequel le système de commande (37) est un système de commande électrofluidique, qui contient un système de soupape pilote (48) pouvant être actionné électriquement qui est réalisé pour soumettre les poussoirs de soupape (15, 16) de manière commandée à l'action d'un fluide d'entraînement fournissant la force d'entraînement (FA) sur la base de signaux de commande électriques qui proviennent d'une unité de commande électronique (49) du système de commande (37),
**caractérisé en ce**
- **que** le système de commande (37) est un système de commande proportionnel, par lequel les poussoirs de soupape (15, 16) peuvent être positionnés en continu au choix dans la position de fermeture ainsi que dans plusieurs positions d'ouverture dégageant différentes sections transversales d'écoulement de l'ouverture de trop-plein (22),
- dans lequel le système de commande (37) pour chaque unité de soupape (3, 4) contient un système de mesure de déplacement (52) détectant la position de commutation instantanée du poussoir de soupape (15, 16),
- dans lequel l'unité de commande (49) est en mesure de piloter de manière électrique, sur la base des valeurs de mesure du système de mesure de déplacement (52) et en tenant compte en complément de données de retour externes, le système de soupape pilote (48) de telle sorte que les poussoirs de soupape (15, 16) des deux unités de soupape (3, 4) sont positionnés selon les besoins.

2. Ensemble de soupapes selon la revendication 1, **caractérisé en ce que** la section de verrouillage (23) de chaque poussoir de soupape (15, 16) est réalisée en tant que tête de soupape (23a), qui est disposée dans la première section de chambre de soupape (12a, 13a) à une distance axiale par rapport à la première section de fermeture (15a, 16a) du poussoir de soupape (15, 16).

3. Ensemble de soupapes selon la revendication 1 ou 2, **caractérisé en ce que** les sections de fermeture (15a, 15b ; 16a, 16b) de chaque poussoir de soupape (15, 16) sont réalisées en tant que piston de fermeture (24) reposant de manière étanche et de manière à pouvoir coulisser par glissement sur la surface périphérique intérieure (8a) du corps de paroi (8).

4. Ensemble de soupapes selon l'une quelconque des revendications 1 à 3, **caractérisé en ce que** sont associés à chaque poussoir de soupape (15, 16) des moyens de ressort (38) de l'unité de soupape (3, 4), qui précontraignent le poussoir de soupape (15, 16) en direction de la position de fermeture.

5. Ensemble de soupapes selon l'une quelconque des revendications 1 à 4, **caractérisé en ce qu'**il présente un boîtier de soupape (5) logeant les poussoirs de soupape (15, 16), sur lequel est monté un boîtier de commande (44) logeant le système de commande (37).

6. Ensemble de soupapes selon l'une quelconque des revendications 1 à 5, **caractérisé en ce que** chaque poussoir de soupape (15, 16) présente un piston d'entraînement (45) pouvant être soumis de manière commandée à l'action d'un fluide d'entraînement, qui est réalisé de manière opportune en une unité modulaire avec une des sections de fermeture (16a, 16b).

7. Ensemble de soupapes selon l'une quelconque des revendications 1 à 6, **caractérisé en ce que** les deux unités de soupape (3, 4) du groupe de commande de soupape (2, 2a) sont disposées côte à côte avec des axes longitudinaux (12c, 15c, 13c, 16c) parallèles les uns aux autres et ce faisant dans une direction axiale desdits axes longitudinaux (12c, 15c, 13c, 16c) à une même hauteur, dans lequel elles sont orientées de telle sorte que leurs sièges de soupape (18) pointent dans la même direction axiale et dans lequel les deux unités de soupape (3, 4) du groupe de commande de soupape (2, 2a) sont réalisées de manière opportune de manière identique l'une à l'autre.

8. Ensemble de soupapes selon la revendication 7, **caractérisé en ce que** les deux poussoirs de soupape (15, 16) de chaque groupe de commande de soupape (2, 2a) sont disposés dans un boîtier de soupape (5) commun, de manière préférée d'un seul tenant, dans lequel est réalisé un canal de liaison (28) reliant la première section de chambre de soupape (12a) de la première unité de soupape (3) à la seconde section de chambre de soupape (13b) de la seconde unité de soupape (4), duquel dévie un canal de travail (32) menant à l'ouverture de travail (32a) et qui a de manière opportune un profil au moins sensiblement en forme de S.

9. Ensemble de soupapes selon la revendication 8, **caractérisé en ce que** les deux unités de soupape (3, 4) sont réalisées à la manière de cartouche et sont insérées respectivement axialement dans un alésage de logement (6, 7) du boîtier de soupape (5), dans lequel chaque unité de soupape (3, 4) présente un corps de paroi (8) en forme de manchon, dans lequel le poussoir de soupape (15, 16) associé est fixé de manière imperdable.

10. Ensemble de soupapes selon l'une quelconque des revendications 1 à 9, **caractérisé en ce qu'**il contient deux groupes de commande de soupape (2, 2a), dans lequel les premières sections de chambre de soupape (13a) des secondes unités de soupape (4) des deux groupes de commande de soupape (2, 2a) communiquent conjointement avec une ouverture d'alimentation (34a) pouvant être reliée à une source de pression (P) et dans lequel de manière opportune les secondes sections de chambre de soupape (12b) des premières unités de soupape (3) des deux groupes de commande de soupape (2, 2a) communiquent conjointement avec une ouverture de décharge (33a) pouvant mener à un puits de pression (R).
